(19) Europäisches Patentamt
European Patent Office
Office européen des brevets

(11) **EP 2 617 550 B1**

(12) **FASCICULE DE BREVET EUROPEEN**

(45) Date de publication et mention
de la délivrance du brevet:
**21.09.2016 Bulletin 2016/38**

(51) Int Cl.:
***B29C 53/56*** *(2006.01)* ***H01H 33/56*** *(2006.01)*

(21) Numéro de dépôt: **13151108.1**

(22) Date de dépôt: **14.01.2013**

(54) **Isolateur en materiau composite destiné à contenir une chambre de coupure**

Verbundisolator zur Aufnahme einer Schneidekammer

Insulator made of composite material intended for holding a switching chamber

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2012 FR 1250591**

(43) Date de publication de la demande:
**24.07.2013 Bulletin 2013/30**

(73) Titulaire: **General Electric Technology GmbH**
**5400 Baden (CH)**

(72) Inventeurs:
• **Laporte, Camille**
**69100 Villeurbanne (FR)**
• **Kieffel, Yannick**
**38440 Saint-Jean-De-Bournay (FR)**
• **Berteloot, Thomas**
**69001 Lyon (FR)**

(74) Mandataire: **Ilgart, Jean-Christophe**
**BREVALEX**
**95, rue d'Amsterdam**
**75378 Paris Cedex 8 (FR)**

(56) Documents cités:
**EP-A1- 2 266 788** **EP-A1- 2 390 890**
**WO-A1-2011/086028** **DE-U1- 8 709 706**

**Description**

L'invention concerne un isolateur en matériau composite destiné à contenir une chambre de coupure comportant une partie cylindrique ayant deux extrémités dans laquelle est logée la chambre de coupure et une partie tronconique à chacune de ses extrémités.

On connait déjà des isolateurs destinés à contenir une chambre de coupure en matériau céramique présentant une forme de tonneau. Ces isolateurs sont plus larges au centre en raison de la présence de la chambre de coupure. En revanche, de part et d'autre de la chambre de coupure, l'isolateur en céramique comporte une partie de section réduite, par exemple une partie tronconique. Ceci permet de réduire le volume global de la chambre et par suite la quantité de gaz SF6 contenu dans cette chambre.

On connait également des chambres de coupure réalisées par enroulement d'un filament de fibre de verre imprégné de résine sur un mandrin cylindrique. Après enroulement du filament, la résine imprégnée de fibre de verre est polymérisée dans un four puis l'isolateur est démandriné. Selon ce procédé il est impossible de réaliser un isolateur en forme de tonneau car cette forme serait impossible à démandriner. En conséquence, le volume intérieur d'une chambre d'isolateur composite est plus grand que le volume intérieur qu'une chambre céramique. Par conséquent, la quantité de SF6 est plus importante dans une chambre composite que dans une chambre céramique. Par suite, les chambres composite ont un impact défavorable sur l'environnement plus important que les chambres céramique.

La présente invention a pour objet la réalisation d'un isolateur de type composite en forme de tonneau présentant une section plus faible à chacune de ses extrémités de manière à réduire le volume intérieur de la chambre et par conséquent la quantité de gaz SF6 contenu dans cette chambre.

On connait déjà (FR 2645070) des éléments de structure en matériau composite à pièces extrêmes de fixation en métal. Dans cet élément de structure, les pièces extrêmes sont liées mécaniquement à une âme en matière thermoplastique de caractéristique mécanique adaptée à l'application, âme sur laquelle est enroulé l'enroulement filamentaire de renfort.

On connait également (FR 2642783) un dispositif pour protéger les extrémités de réservoir de fluide en matériau composite. Ce dispositif concerne les réservoirs composés d'une enveloppe interne, d'une enveloppe externe, et d'au moins une embase métallique qui comporte un embout cylindrique disposé sensiblement dans l'axe longitudinal du réservoir.

Ces dispositifs n'enseignent pas la réalisation d'un isolateur pour une chambre de coupure composite comportant une forme en tonneau. Ce problème est résolu, conformément à l'invention, par le fait que l'isolateur est réalisé en une première chambre et une seconde chambre, chacune de ces chambres comprenant une partie tronconique suivie elle-même d'une partie cylindrique, la première et la seconde chambres étant assemblées l'une à l'autre bout à bout par leurs parties cylindriques; par le fait que l'isolateur comporte en outre un manchon intérieur et un manchon extérieur, le manchon intérieur étant disposé à l'intérieur des chambres, le manchon extérieur étant disposé à l'extérieur des chambres, le manchon intérieur et le manchon extérieur chevauchant l'assemblage bout à bout de la première et de la seconde chambres; par le fait que le manchon intérieur, la première et la seconde chambres et le manchon extérieur sont réalisés en matériau composite par enroulement hélicoïdal d'un filament de fibre de verre, l'angle d'enroulement (défini par rapport à l'axe de symétrie du cylindre) du filament qui constitue le manchon extérieur étant plus petit que l'angle d'enroulement de la fibre de verre qui constitue la première et la seconde chambres, l'angle d'enroulement du filament qui constitue le manchon intérieur étant plus grand que l'angle d'enroulement de la fibre de verre qui constitue la première et la seconde chambres ; et par le fait que le coefficient d'expansion thermique du matériau du manchon intérieur est inférieur au coefficient d'expansion thermique du matériau des première et seconde chambres et que le coefficient d'expansion thermique du matériau du manchon extérieur est supérieur au coefficient d'expansion thermique du matériau des première et seconde chambres.

Grâce à la conception particulière de l'isolateur selon l'invention, on peut jouer sur les coefficients de dilatation thermique du manchon intérieur, de la première et de la seconde chambres, et du manchon extérieur. Si l'angle d'enroulement hélicoïdal est très important, il y a très peu de dilatation circonférentielle. Par contre, si l'angle d'enroulement est faible, on aura un fort coefficient de dilatation circonférentiel. En prévoyant que le manchon extérieur possède un angle d'enroulement hélicoïdal plus faible que l'angle d'enroulement de la fibre de verre qui constitue la première et la seconde chambres, on assure que le coefficient d'expansion thermique du manchon extérieur est plus grand que le coefficient d'expansion thermique de la première et de la seconde chambres.

De la même manière, en assurant que l'angle d'enroulement du filament qui constitue le manchon intérieur est plus grand que l'angle d'enroulement de la fibre de verre qui constitue la première et la seconde chambres, on assure que le coefficient d'expansion thermique du manchon intérieur est plus faible que le coefficient thermique de la première et de la seconde chambres.

Grâce à la conception particulière de l'isolateur selon l'invention, on peut réaliser un frettage par dilatation en température de chacune des pièces constituant l'isolateur. A température ambiante le diamètre extérieur du manchon intérieur est plus grand que le diamètre intérieur de la première et de la seconde chambres. De la même manière, le diamètre extérieur de la première et de la seconde chambres est plus grand que le diamètre intérieur du manchon extérieur. Lorsque l'on dilate ces pièces en température à une température de l'ordre de 125°C, la première et la seconde chambres se dilatent davantage que le manchon intérieur. De ce fait on peut monter le manchon intérieur sur la première et la seconde chambres. De la même manière, le manchon extérieur se dilate davantage que la première et la seconde chambres. De cette manière on peut monter le manchon extérieur sur la première et la seconde chambres.

Lorsque l'ensemble revient à la température ambiante, on a un frettage du manchon intérieur sur la première et la seconde chambres et du manchon extérieur sur la première et la seconde chambres.

Avantageusement, la partie tronconique de chacune des première et seconde chambres est précédée d'une partie cylindrique de plus petit diamètre que la partie cylindrique suivant la partie tronconique.

Grâce à cette caractéristique, le volume de la chambre est réduit et par conséquent la quantité de SF6 l'est également. On réduit ainsi l'impact négatif sur l'environnement.

De préférence, chacune des première et seconde chambres comporte intérieurement une portée de diamètre augmenté et extérieurement une portée de diamètre réduit, le manchon intérieur étant emmanché sur les portées de diamètre augmenté de la première et de la seconde chambres, le manchon extérieur étant emmanché sur les portées de diamètre réduit de la première et de la seconde chambres.

Grâce à cette caractéristique, le manchon intérieur et le manchon extérieur ne font pas saillie. Ils sont entièrement contenus dans l'épaisseur dans la paroi de la première et de la seconde chambres qui présente ainsi intérieurement et extérieurement un diamètre constant.

De préférence le manchon intérieur et le manchon extérieur sont assemblés à la première et à la seconde chambres par collage au moyen d'une résine époxyde. Les manchons étant assemblés à la fois par collage et par frettage, on obtient une résistance particulièrement forte de l'assemblage.

De préférence la partie cylindrique suivant la partie tronconique de la première chambre est nettement plus longue que la partie cylindrique suivant la partie tronconique de la seconde chambre de façon à ce que le manchon intérieur et le manchon extérieur se trouvent en dehors d'une zone centrale de l'isolateur qui reçoit la chambre de coupure.

Grâce à cette caractéristique l'assemblage entre la première et la seconde chambres se trouve situé dans une zone de champ électrique faible.

Selon une variante de réalisation de l'invention l'isolateur est réalisé par enroulement d'un filament de fibre de verre enrobé de résine sur un mandrin soluble qui est éliminé après polymérisation de la résine dans un four.

Dans ce mode de réalisation, on évite tout assemblage des première et seconde chambres. L'isolateur est réalisé en une pièce unique.

D'autres caractéristiques et avantages de la présente invention apparaîtront encore à la lecture de la description qui suit d'exemples de réalisation donnés à titre illustratif en références aux figures annexées. Sur ces figures:

- La figure 1 est une vue schématique en coupe d'un isolateur réalisé selon un premier mode de réalisation de la présente invention;
- La figure 2 est une vue à échelle agrandie de la zone d'assemblage de la première et de la seconde chambres de la figure 1;
- La figure 3 est un graphique qui représente l'évolution des coefficients longitudinaux et circonférentiels en fonction de l'angle d'enroulement ;
- La figure 4 est une représentation d'un exemple d'isolateur composite cylindrique;
- La figure 5 est une représentation d'un exemple d'isolateur composite en tonneau.

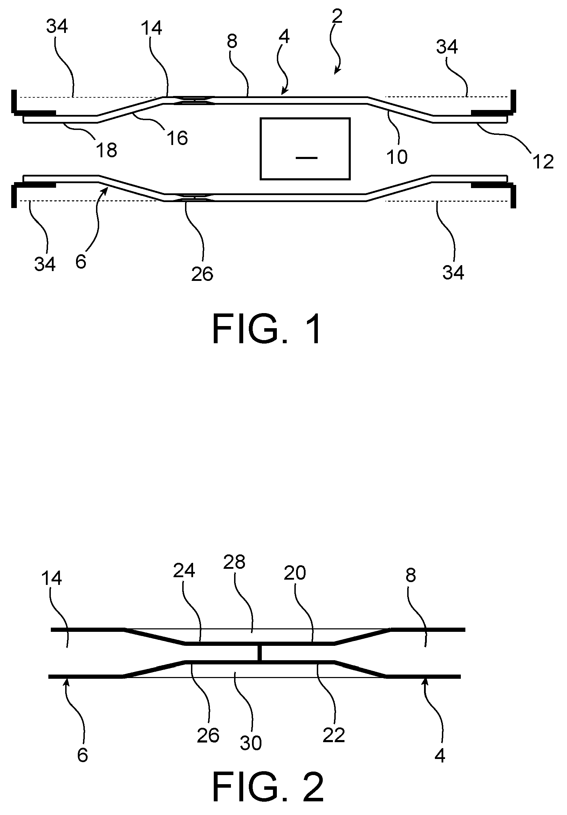

On a représenté sur la figure 1 une vue d'ensemble d'un isolateur destiné à contenir une chambre de coupure. L'isolateur a été désigné par la référence générale 2. Il est composé d'une première chambre 4 et d'une seconde chambre 6. La première chambre 4 est constituée d'une partie de grand diamètre 8, d'une partie tronconique 10 et d'une partie cylindrique de plus petit diamètre 12. De la même manière, la seconde chambre 6 est constituée d'une partie cylindrique de grand diamètre 14, d'une partie tronconique 16, et d'une partie cylindrique de plus petit diamètre 18. La première et la seconde chambre 4,6 sont réalisées séparément par enroulement d'un filament de fibre de verre sur un mandrin. Le mandrin est un cylindre d'aluminium qui tourne sur lui-même. On enroule la fibre de verre sur le mandrin. La fibre de verre passe dans un bain de résine pour être imprégnée de résine. La fibre a un mouvement de translation, ce qui a pour effet de créer un angle d'enroulement hélicoïdal de la fibre sur le mandrin. En faisant varier la vitesse de translation de la fibre, on peut faire varier l'angle d'enroulement de la fibre sur le mandrin. Si la fibre a une vitesse de translation rapide, l'angle d'enroulement sera faible. Au contraire si la fibre a une vitesse de déplacement lente, l'angle d'enroulement sur le mandrin sera important.

Une fois le bobinage terminé, le mandrin, revêtu de la fibre de verre bobinée est passé dans un four afin de polymériser la résine. Après cette opération, on procède au démandrinage, c'est-à-dire à la séparation du mandrin et de la première ou de la seconde chambre. Afin de faciliter le démandrinage, on interpose une couche de papier polyester entre le mandrin et la première couche de bobinage de fibre de verre. De plus, les mandrins sont chromés en surface pour faciliter le démandrinage. D'un côté on tire sur la première ou la seconde chambre de l'autre on tire sur le mandrin pour décoller la première ou la seconde chambre du mandrin.

On a représenté sur la figure 2 une vue à échelle agrandie de la zone de jonction de la première et de la seconde chambre 4,6. La première et la seconde chambre sont disposées bout à bout, leurs extrémités étant en contact. La première chambre comporte intérieurement une portée de diamètre augmenté 20 de diamètre supérieur au diamètre de la partie cylindrique 8 et extérieurement une portée de diamètre réduit 22 de diamètre inférieur au diamètre extérieur de la partie cylindrique 8. De la même manière, la seconde chambre comporte intérieurement une portée 24 de diamètre augmenté, dont le diamètre est plus grand que le diamètre intérieur de la partie cylindrique 14 et extérieurement une portée de diamètre réduit 26 dont le diamètre est inférieur au diamètre extérieur de la partie cylindrique 14. Les portées de diamètres augmentés 20 et 24 délimitent un espace dans lequel un manchon intérieur 28 est logé. De la même manière, les portées 22 et 26 délimitent un espace dans lequel un manchon extérieur 30 est logé. Le manchon intérieur 28 et le manchon extérieur 30 sont collés au moyen d'une colle époxyde sur l'extrémité de la première chambre 4 et de la deuxième chambre 6. De la même manière, le manchon extérieur 30 est collé sur l'extrémité de la première chambre 4 et de la seconde chambre 6.

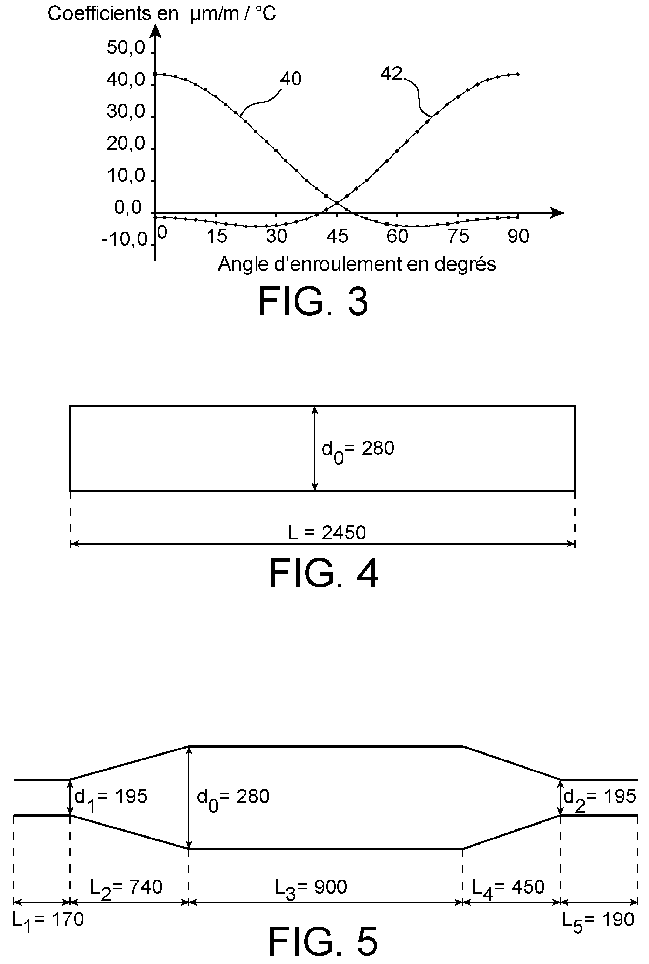

De plus, comme on l'a expliqué antérieurement, le manchon intérieur 28 et le manchon extérieur 30 sont assemblés par frettage sur la partie cylindrique 8 de la première chambre 4 et la partie cylindrique 14 de la seconde chambre 6. Pour ce faire, le coefficient d'expansion thermique du manchon intérieur 28 est inférieur au coefficient d'expansion thermique de la première chambre 4 et de la seconde chambre 6. Le coefficient d'expansion thermique du manchon extérieur 30 est supérieur au coefficient d'expansion thermique de la première chambre 4 et de la seconde chambres 6. Cette hiérarchie des coefficients d'expansion thermique peut être obtenue, comme on l'a expliqué précédemment et comme on peut le constater sur la figure 3, en jouant sur l'angle d'enroulement des fibres de verre sur les mandrins du manchon intérieur 28, de la première et de la seconde chambre 4,6 et du manchon extérieur 30. La figure 3 représente l'évolution des coefficients de dilatation longitudinaux et circonférentiels en fonction des angles d'enroulement obtenue pour un taux de fibre en masse de 65%. La courbe représente le coefficient 40 de dilatation circonférentiel (c65) et la courbe 42 le coefficient de dilatation longitudinal (L65). Avec un angle d'enroulement très important, il y aura très peu de dilatation thermique dans la direction circonférentielle par contre, si l'angle d'enroulement est faible, on aura un fort coefficient de dilatation circonférentiel. A cet effet, l'angle d'enroulement du filament qui constitue le manchon extérieur est plus petit que l'angle d'enroulement de la fibre de verre qui constitue la première et la seconde chambres 4,6 et l'angle d'enroulement du filament qui constitue le manchon intérieur 28 est plus grand que l'angle d'enroulement de la fibre de verre qui constitue la première et la seconde chambres 4,6.

A température ambiante, le diamètre extérieur du manchon intérieur 28 est plus grand que le diamètre des portées 20 et 24 de la première chambre 4 et de la seconde chambre 6. Par conséquent, le manchon intérieur 28 ne peut pas se monter sur ces portées. De la même manière, à température ambiante, le diamètre intérieur du manchon extérieur 30 est plus petit que le diamètre des portées 22 et 26 de la première chambre 4 et de la seconde chambre 6. Par suite, le manchon extérieur 30 ne peut pas se monter sur ces portées 22 et 26.

La température maximale de l'appareillage électrique est de 105°C. On réalise donc l'assemblage de sorte à toujours obtenir un effort de serrage à la température de service de 100°C à 105°C du fait que les pièces s'auto-serrent. Il est à noter toutefois que l'assemblage ne doit pas être fait une température trop élevée afin de ne pas dégrader les matériaux.

Prenons l'exemple d'un isolateur de chambre de diamètre intérieur utile de 280 mm pour une épaisseur de composite d'environ 10 mm. Dans la zone de liaison entre les chambres, l'épaisseur de composite est réduite à environ 6 mm. Le choix des paramètres suivants nous permet d'assurer l'effort de serrage des pièces jusqu'à 105°C:

- un manchon intérieur 28 de diamètre externe 282,2 mm et de coefficient d'expansion thermique circonférentiel 15,
- les chambres 4 et 6 de diamètre interne 282 mm, de diamètre externe 288 mm et de coefficient d'expansion thermique circonférentiel 23,
- un manchon extérieur 30 de diamètre interne 287,7 et de coefficient d'expansion thermique circonférentiel 35.

Lorsque l'on chauffe la première chambre 4 et la seconde chambre 6 à une température voisine de 70°C, elles se dilatent de façon à introduire les extrémités des parties cylindriques 8 et 14 dans le manchon intérieur 28. Avec les valeurs déterminées ci-dessus, le diamètre intérieur des parties cylindriques est alors de 282,32 mm alors que le diamètre extérieur du manchon 28 est de 282,2 mm. De la même manière, le manchon extérieur 30 est chauffé à une température voisine de 125°C de manière à d'introduire les portées 22 et 26 à l'intérieur du manchon extérieur 30. Le diamètre extérieur des parties cylindriques 8 et 14 est alors de 288,33 mm et le diamètre intérieur du manchon 30 de 288,76 mm. Ainsi, le manchon intérieur 28 et le manchon extérieur 30 sont assemblés à la première et la seconde chambre 4,6 par frettage.

A 105°C, un effort de serrage est toujours présent. Le diamètre interne du manchon 28 est de 282,56 mm alors que le diamètre externe des parties cylindriques 8 et 14 est de 282,55 mm. De la même manière à 105°C, le diamètre interne du manchon 30 est de 288,55 mm alors que le diamètre externe des parties cylindriques 8 et 14 est de 288,56 mm.

Comme on le remarque sur la figure 1, la partie cylindrique 8 de grand diamètre de la première chambre 4 est beaucoup plus longue que la partie cylindrique 14 de grand diamètre de la chambre 6. Cette caractéristique a pour but d'éviter que la chambre de coupure schématiquement représentée par la référence 32, se trouve en regard de la zone d'assemblage de la partie cylindrique 8 de la première chambre et de la partie cylindrique 14 de la seconde chambre 6. A chaque extrémité de l'isolateur 2 il y a peu de contraintes électriques. L'assemblage de la première chambre 4 et de la seconde chambre 6 est donc situé dans une zone à faibles contraintes électriques, ce qui évite de dégrader la tenue électrique de l'isolant.

L'isolateur qui vient d'être décrit présente ainsi une forme en tonneau. La partie de plus petit diamètre 12 et la partie de plus petit diamètre 18 permettent une réduction du volume de la chambre et par conséquent une réduction du volume SF6 contenu à l'intérieur de cette chambre par rapport à un isolateur de section constante. On a schématisé sur la figure 1 en traits tiretés 34, le volume qu'aurait un isolateur sans réduction de diamètre. Par suite, le volume compris entre le cylindre de section constante 34 et les parties de plus petits diamètres 12 et 18 ainsi que les parties tronconiques 10 et 16 représentent le volume gagné, permettant une réduction du volume SF6.

EXEMPLE DE REALISATION:

Dans l'exemple suivant on présente un isolateur de chambre pour disjoncteur Live Tank 245kV de référence commerciale Alstom GL314. L'isolateur composite cylindrique de référence à un diamètre intérieur utile $d_0$ de 280 mm et une longueur L de 2450 mm, (voir Figure 4) soit un volume intérieur de : $V_1 = \dfrac{\pi * d_0^2}{4} * L = 151\ \text{L}$ Le volume de l'isolateur composite tonneau équivalent (voir Figure 5) est de :

$$V_2 = \frac{\pi * d_1^2}{4} * L_1 + \frac{\pi * L_2 * d_0^2 (1 + \frac{d_1}{d_0} + \frac{d_1^2}{d_0^2})}{12} + \frac{\pi * d_0^2}{4} * L_3 + \frac{\pi * L_4 * d_0^2 (1 + \frac{d_2}{d_0} + \frac{d_2^2}{d_0^2})}{12} + \frac{\pi * d_2^2}{4} * L_5 = 119,5\ \text{L}$$

Le volume de SF6 sauvé est donc de V1 - V2 = 31,5L à multiplier par la pression de l'appareil (typiquement 6.3 bars) soit un volume total de 198 L. Ceci équivaut à 1,20 kg de SF6 (195L/24L/mol*0.146 kg/mol) ou un potentiel de 28,8 tonnes de CO2 (1,20 * 23900).

Dans le cadre d'un disjoncteur 245 kV, l'invention permet de réduire l'émission potentielle dans l'atmosphère (en cas de fuite accidentelle) de 28,8 tonnes de CO2. Ce chiffre est à multiplier par deux pour un disjoncteur 420 kV conçu avec deux chambres de coupure.

Selon un deuxième mode de réalisation de l'invention (non représenté) on réalise un isolateur comprenant, comme le mode de réalisation décrit en références aux figures 1 et 2, une partie de grand diamètre, de parties tronconiques associées à la partie de plus grand diamètre dans laquelle est contenue la chambre de coupure 32 et des parties de diamètres réduits similaires aux parties 12 et 18 de l'exemple de réalisation représenté sur les figures 1 et 2. Etant donné que l'isolateur est réalisé en une seule pièce, il est impossible de démandriner. C'est pourquoi le mandrin est réalisé en un matériau soluble.

On bobine de la fibre de verre sur le mandrin soluble. Cette fibre de verre est imprégnée de résine. On réalise ainsi plusieurs couches de bobinage hélicoïdales en va et vient d'un bout à l'autre de l'isolateur. Le mandrin soluble enrobé de fibre de verre est ensuite passé dans un four afin de polymériser la résine. Après cette opération le mandrin soluble est éliminé. On obtient ainsi un isolateur, réalisé en une seule pièce, présentant une forme sensiblement en tonneau permettant de réduire le volume du SF6 comme le premier mode de réalisation décrit en référence figures 1 et 2.

**Revendications**

**1.** Isolateur en matériau composite destiné à contenir une chambre de coupure, comportant une partie cylindrique ayant deux extrémités dans laquelle est logée la chambre de coupure et une partie tronconique (10,16) à chacune de ses extrémités,

l'isolateur étant **caractérisé en ce qu'**il est réalisé en une première chambre et une seconde chambre (4,6), chacune de ces chambres comprenant une partie tronconique (10,16) suivie elle-même d'une partie cylindrique (8,14), la première et la seconde chambres (4,6) étant assemblées l'une à l'autre bout à bout par leurs parties cylindriques (8,14) ;

l'isolateur comportant en outre un manchon intérieur (28) et un manchon extérieur (30), le manchon intérieur étant disposé à l'intérieur des chambres (4,6), le manchon extérieur (30) étant disposé à l'extérieur des chambres (4,6), le manchon intérieur (28) et le manchon extérieur (30) chevauchant l'assemblage bout à bout de la première et de la seconde chambres (4,6) ;

le manchon intérieur (28), la première et la seconde chambres (4,6) et le manchon extérieur (30) étant réalisées en un matériau composite par enroulement hélicoïdal d'un filament de fibre de verre, l'angle d'enroulement du filament qui constitue le manchon extérieur (30) étant plus petit que l'angle d'enroulement de la fibre de verre qui constitue la première et la seconde chambres (4,6), l'angle d'enroulement du filament qui constitue le manchon intérieur (28) étant plus grand que l'angle d'enroulement de la fibre de verre qui constitue la première et la seconde chambres (4,6) ;

le coefficient d'expansion thermique du matériau du manchon intérieur (28) étant inférieur au coefficient d'expansion thermique du matériau des première et seconde chambres (4,6) et le coefficient d'expansion thermique du matériau du manchon extérieur (30) étant supérieur au coefficient d'expansion thermique du matériau des première et seconde chambres (4,6).

2. Isolateur selon la revendication 1, **caractérisé en ce que** la partie tronconique (10,16) de chacune des première et seconde chambres (4,6) est précédée d'une partie cylindrique (12,18) de plus petit diamètre que la partie cylindrique (8,14) suivant la partie tronconique (10,16).

3. Isolateur selon la revendication 1 ou 2, **caractérisé en ce que** chacune des première et seconde chambres (4,6) comporte intérieurement une portée de diamètre augmenté (20,24) et extérieurement une portée de diamètre réduit (22,26), le manchon intérieur (28) étant emmanché sur les portées de diamètre augmenté (20,24), la première et la seconde chambre (4,6), le manchon extérieur (30), étant emmanché sur les portées de diamètre réduit (22,26) de la première et de la seconde chambre (4,6).

4. Isolateur selon la revendication 1, **caractérisé en ce que** le manchon intérieur (28) et le manchon extérieur (30) sont assemblés à la première et seconde chambres (4,6) par frettage.

5. Isolateur selon la revendication 3 ou 4, **caractérisé en ce que** le manchon intérieur (28) et le manchon extérieur (30) sont assemblés à la première et la seconde chambres (4,6) par collage au moyen d'une colle époxyde.

6. Isolateur selon l'une quelconque des revendications 3 à 5, caractérisé ce que la partie cylindrique (8) suivant la partie tronconique (10) de la première chambre est nettement plus longue que la partie cylindrique 14 suivant la partie tronconique (16) de la seconde chambre (6), de façon à ce que le manchon intérieur 28 et le manchon extérieur (30) se trouvent en regard d'une zone centrale de l'isolateur qui reçoit la chambre de coupure (32).

7. Isolateur selon la revendication 1, caractérisé ce qu'il est réalisé par l'enroulement d'un filament de fibre de verre enrobé de résine sur un mandrin soluble qui est éliminé après polymérisation de la résine dans un four.

**Patentansprüche**

1. Isolator aus Verbundmaterial, der dazu ausgelegt ist, eine Unterbrecherkammer zu enthalten, umfassend einen zylindrischen Teil mit zwei Enden, in dem die Unterbrecherkammer untergebracht ist, und einen kegelstumpfförmigen Teil (10, 16) an jedem seiner Enden,

wobei der Isolator **dadurch gekennzeichnet ist, dass** er mit einer ersten Kammer und einer zweiten Kammer (4, 6) realisiert ist, wobei jede dieser Kammern einen kegelstumpfförmigen Teil (10, 16) umfasst, auf den wiederum ein zylindrischer Teil (8, 14) folgt, wobei die erste und die zweite Kammer (4, 6) an ihren zylindrischen Teilen (8, 14) Ende an Ende zusammengefügt sind;

wobei der Isolator ferner eine Innenmuffe (28) und eine Außenmuffe (30) umfasst, wobei die Innenmuffe im Inneren der Kammern (4, 6) angeordnet ist, wobei die Außenmuffe (30) außerhalb der Kammern (4, 6) angeordnet ist, wobei die Innenmuffe (28) und die Außenmuffe (30) die Ende-an-Ende-Anordnung der ersten und der zweiten Kammer (4, 6) überlappen;

wobei die Innenmuffe (28), die erste und die zweite Kammer (4, 6) und die Außenmuffe (30) aus einem Verbundmaterial durch schraubenförmiges Wickeln eines Glasfaserfilaments realisiert sind, wobei der Wicklungswinkel des Filaments, das die Außenmuffe (30) bildet, kleiner ist als der Wicklungswinkel der Glasfaser, die die erste und die zweite Kammer (4, 6) bildet, wobei der Wicklungswinkel des Filaments, das die Innenmuffe (28) bildet, größer ist als der Wicklungswinkel der Glasfaser, die die erste und die zweite Kammer (4, 6) bildet;

wobei der thermische Ausdehnungskoeffizient des Materials der Innenmuffe (28) kleiner ist als der thermische Ausdehnungskoeffizient des Materials der ersten und der zweiten Kammer (4, 6), und der thermische Ausdehnungskoeffizient des Materials der Außenmuffe (30) größer ist als der thermische Ausdehnungskoeffizient des Materials der ersten und der zweiten Kammer (4, 6).

**2.** Isolator nach Anspruch 1, **dadurch gekennzeichnet, dass** vor dem kegelstumpfförmigen Teil (10, 16) sowohl der ersten als auch der zweiten Kammer (4, 6) ein zylindrischer Teil (12, 18) vorgesehen ist mit kleinerem Durchmesser als der zylindrische Teil (8, 14), der auf den kegelstumpfförmigen Teil (10, 16) folgt.

**3.** Isolator nach Anspruch 1 oder 2, **dadurch gekennzeichnet, dass** sowohl die erste als auch die zweite Kammer (4, 6) innen einen Bereich mit vergrößertem Durchmesser (20, 24) und außen einen Bereich mit verringertem Durchmesser (22, 26) umfasst, wobei die Innenmuffe (28) auf die Bereiche mit vergrößertem Durchmesser (20, 24) der ersten und der zweiten Kammer (4, 6) aufgedrückt ist, wobei die Außenmuffe (30) auf die Bereiche mit verringertem Durchmesser (22, 26) der ersten und der zweiten Kammer (4, 6) aufgedrückt ist.

**4.** Isolator nach Anspruch 1, **dadurch gekennzeichnet, dass** die Innenmuffe (28) und die Außenmuffe (30) an der ersten und der zweiten Kammer (4, 6) durch Schrumpfen angebracht sind.

**5.** Isolator nach Anspruch 3 oder 4, **dadurch gekennzeichnet, dass** die Innenmuffe (28) und die Außenmuffe (30) an der ersten und der zweiten Kammer (4, 6) durch Kleben mit Hilfe eines Epoxidklebers angebracht sind.

**6.** Isolator nach einem der Anspruche 3 bis 5, **dadurch gekennzeichnet, dass** der zylindrische Teil (8), der auf den kegelstumpfförmigen Teil (10) der ersten Kammer folgt, wesentlich länger ist als der zylindrische Teil (14), der auf den kegelstumpfförmigen Teil (16) der zweiten Kammer (6) folgt, derart, dass die Innenmuffe (28) und die Außenmuffe (30) einer zentralen Zone des Isolators gegenüber liegen, die die Unterbrecherkammer (32) aufnimmt.

**7.** Isolator nach Anspruch 1, **dadurch gekennzeichnet, dass** er durch Wickeln eines harzummantelten Glasfaserfilaments auf einem löslichen Dorn realisiert ist, der nach Polymerisation des Harzes in einem Ofen beseitigt ist.

## Claims

**1.** An insulator of composite material for containing an arc-control chamber, having a cylindrical portion with two ends in which the arc-control chamber is housed and a frustoconical portion (10, 16) at each of its ends,
the insulator being **characterized in that** the insulator is made as a first chamber and as a second chamber (4, 6), each of the chambers having a frustoconical portion (10, 16) itself followed by a cylindrical portion (8, 14), the first and second chambers (4, 6) being joined together end to end via their cylindrical portions (8, 14);
the insulator further including an inside sleeve (28) and an outside sleeve (30), the inside sleeve being arranged inside the chambers (4, 6), the outside sleeve (30) being arranged outside the chambers (4, 6), the inside sleeve (28) and the outside sleeve (30) overlapping the end-to-end junction of the first and second chambers (4, 6);
the inside sleeve (28), the first and second chambers (4, 6), and the outside sleeve (30) are made of a composite material by helically winding a glass fiber filament, the winding angle of the filament constituting the outside sleeve (30) being smaller than the winding angle of the glass fiber constituting the first and second chambers (4, 6), and the winding angle of the filament constituting the inside sleeve (28) being greater than the winding angle of the glass fiber constituting the first and second chambers (4, 6);
the coefficient of thermal expansion of the material constituting the inside sleeve (28) is less than the coefficient of thermal expansion of the material constituting the first and second chambers (4, 6), and the coefficient of thermal expansion of the material constituting the outside sleeve (30) is greater than the coefficient of thermal expansion of the material constituting the first and second chambers (4, 6).

**2.** An insulator according to claim 1, **characterized in that** the frustoconical portion (10, 16) of each of the first and second chambers (4, 6) is preceded by a cylindrical portion (12, 18) of smaller diameter than the cylindrical portion (8, 14) following the frustoconical portion (10, 16).

**3.** An insulator according to claim 1 or claim 2, **characterized in that** each of the first and second chambers (4, 6) includes internally a bearing surface (20, 24) of increased diameter and externally a bearing surface (22, 26) of reduced diameter, the inside sleeve (28) being engaged against the increased-diameter bearing surfaces (20, 24) of the first and second chambers (4, 6), and the outside sleeve (30) being engaged against the reduced-diameter bearing surfaces (22, 26) of the first and second chambers (4, 6).

4. An insulator according to claim 1, **characterized in that** the inside sleeve (28) and the outside sleeve (30) are assembled to the first and second chambers (4, 6) by shrinking.

5. An insulator according to claim 3 or claim 4, **characterized in that** the inside sleeve (28) and the outside sleeve (30) are assembled to the first and second chambers (4, 6) by bonding by means of an epoxy adhesive.

6. An insulator according to any one of claims 3 to 5, **characterized in that** the cylindrical portion (8) following the frustoconical portion (10) of the first chamber is considerably longer than the cylindrical portion (14) following the frustoconical portion (16) of the second chamber (6), so that the inside sleeve (28) and the outside sleeve (30) are located facing a central zone of the insulator that receives the arc-control chamber (32).

7. An insulator according to claim 1, **characterized in that** it is made by winding a resin-coated glass fiber filament onto a soluble mandrel that is eliminated after the resin has been polymerized in an oven.

FIG. 1

FIG. 2

Coefficients en µm/m / °C

FIG. 3

FIG. 4

FIG. 5

**RÉFÉRENCES CITÉES DANS LA DESCRIPTION**

**Documents brevets cités dans la description**

- FR 2645070

- FR 2642783